# FASCICULE DE BREVET EUROPEEN

(11) **EP 2 755 160 B1**
(45) Date de publication et mention de la délivrance du brevet: **29.07.2015**
(21) Numéro de dépôt: 14150489.4
(22) Date de dépôt: 08.01.2014
(51) Int. Cl.: G06F 21/62

(54) **Procédé de traçage de données liées à l'activité d'un utilisateur d'un équipement**
Verfahren zur Nachverfolgung von Daten, die den Benutzer eines Gerätes betreffen
Method of tracing data related to a device user

(30) Priorité: 11.01.2013 FR 1350242
(43) Date de publication de la demande: 16.07.2014
(73) Titulaire: Cassidian CyberSecurity SAS, 78990 Elancourt (FR)
(72) Inventeur: Picod, Jean-Michel, 92130 Issy les Moulineaux (FR); Gompel, Paul, 92100 Boulogne-Billancourt (FR)
(74) Mandataire: Lebkiri, Alexandre

(56) Documents cités:
- WRIGHT C P ET AL: "Cryptographic File Systems Performance: What You Don't Know Can Hurt You", IEEE SECURITY IN STORAGE WORKSHOP, XX, XX, 1 janvier 2003 (2003-01-01), XP002319389,
- MICROSOFT CORPORATION: "Encrypting File System for Windows 2000", MICROSOFT WINDOWS 2000 SERVER, XX, XX, 1 juillet 1999 (1999-07-01), XP002319388,
- BLAZE MATT: "Cryptographic file system for Unix", ACM CONFERENCE ON COMPUTER AND COMMUNICATIONS SECURITY, XX, XX, 3 novembre 1993 (1993-11-03), pages 9-16, XP002165552,

## Description

### DOMAINE

Le domaine de l'invention concerne la sécurisation des données d'un utilisateur se connectant à un équipement et la pérennisation de leur sécurisation après sa déconnexion vis-à-vis d'autres utilisateurs du même équipement. L'invention se rapporte aux équipements tels que des stations de travail connectées à un réseau pour la sécurisation de l'accès aux données sauvegardées volontairement ou involontairement d'un utilisateur après qu'il ait quitté sa session.

Le domaine de l'invention se rapporte également au chiffrement et le traçage des données générées lors de l'activité d'un utilisateur sur un équipement.

### ETAT DE L'ART

Il existe des systèmes d'exploitation permettant la gestion d'un environnement applicatif autorisant simplement l'effacement des données générées après la déconnexion d'un utilisateur à une station de travail. C'est le cas des systèmes UNIX offrant par exemple dans une configuration réseau : une station de travail complètement déportée d'un serveur comprenant des moyens de calculs et de la mémoire.

Dans ce cas, après la déconnexion d'un utilisateur, les données temporaires créées lors de la session de l'utilisateur et les données persistantes correspondant à l'environnement de l'utilisateur sont généralement stockées sur un serveur distant. De ce fait, une connexion d'un autre utilisateur subséquente à la déconnexion d'un premier utilisateur ne lui permet pas de récupérer des données laissées sur la même station de travail. On connait par exemple l'application CITRIX qui permet de centraliser les moyens de calculs communs à une communauté d'individus sur un serveur distant. Ainsi un utilisateur n'utilise son poste de travail que comme un moyen d'accès à son environnement de travail ou son espace personnalisé. De ce fait, le poste reste vierge ou presque vis-à-vis des traces de l'activité d'un utilisateur sur le poste local.

Par ailleurs, de manière à tracer toutes les données correspondant à l'activité d'un utilisateur en vue de les effacer ou de les rendre non accessibles à un autre utilisateur du même poste, il existe également des outils dits de « blanchiment de poste ». Ces outils permettent d'effacer les traces sur le disque dur des données générées par l'activité d'un utilisateur.

Il existe également des solutions permettant le chiffrement de données d'un disque dur, par exemple, de manière à rendre inaccessible les données générées lors d'une session d'un utilisateur après la déconnexion de ce dernier. « ZoneCentral » est un outil de ce type permettant le chiffrement de données d'un utilisateur.

En revanche, ces solutions sont généralement conçues pour être dédiées à un unique utilisateur. Le poste est alors spécifique et contient une clef permettant une compatibilité avec un identifiant utilisateur ou un code personnalisé ou encore un certificat stocké sur un support externe.

Les solutions précitées ont des inconvénients lorsque l'équipement est dédié à un usage multi-utilisateurs. Notamment, un inconvénient majeur est qu'elles ne permettent pas de laisser un équipement, après l'ouverture et la fermeture d'une session d'un utilisateur, totalement vierge des données générées à l'issu de l'activité de l'utilisateur précédemment connecté.

Par ailleurs, certaines solutions s'attachent à rendre inaccessibles des données persistantes d'un utilisateur et d'autres solutions s'attachent à effacer quelques traces de données temporaires générées par l'activité de l'utilisateur sans pour autant offrir une politique de sécurisation commune à toutes les données générées lors de la session d'un utilisateur.

Aucune solution ne laisse véritablement un équipement vierge des données résultantes d'une activité utilisateur après sa déconnexion. Cette possibilité doit en outre se faire tout en préservant :
- une qualité de service relative à la sauvegarde des données de l'utilisateur liée à son activité sur l'équipement et ;
- un confort d'utilisation par la limitation des interfaces de gestion de configurations supplémentaires, notamment vis-à-vis d'une sécurité à satisfaire.
Par ailleurs, les documents XP002319389 et XP002319388 divulguent des systèmes de fichiers chiffrés ainsi que les détails d'implémentation et d'intégration à un système d'exploitation.

### RESUME DE L'INVENTION

L'invention permet de résoudre les inconvénients précités.

L'objet de l'invention concerne un procédé de traçage de données liées à l'activité d'un utilisateur d'un équipement, ledit équipement étant connecté à un réseau, ledit équipement comportant une interface permettant d'ouvrir une session à au moins un utilisateur et permettant l'exécution d'un ensemble d'applications utilisateur, le procédé comprenant :
- une première étape d'authentification d'un utilisateur se connectant à l'équipement, cette étape comprenant :
   ∘ l'authentification d'un utilisateur à l'équipement ;
   ∘ la génération d'un premier code aléatoire correspondant à une clef de chiffrement par une première fonction cryptographique ;
   ∘ la création d'au moins un premier volume chiffré sauvegardé dans une mémoire de l'équipement, le chiffrement des données sur le premier volume chiffré s'effectuant à partir du premier code aléatoire ;
   ∘ la création d'un premier ensemble de liens de redirection permettant de désigner des chemins d'accès pour chaque application des enregistrements de données temporaires sur le premier volume chiffré ;
- une seconde étape de lancement d'au moins une application de l'équipement comprenant :
   ∘ la génération d'un second code à partir d'une seconde fonction cryptographique, le second code étant fonction d'une donnée d'authentification de l'utilisateur ;
   ∘ la création d'un second volume chiffré dans une mémoire de l'équipement, les données stockées dans ledit second volume étant des données persistantes comprenant un premier ensemble de données provenant d'un dispositif externe, le chiffrement des données stockées sur le second volume s'effectuant au moins à partir du second code ;
   ∘ la création d'un second ensemble de liens de redirection permettant de désigner des chemins d'accès pour chaque application des enregistrements de données persistantes sur le second volume chiffré.

Un avantage de la solution de l'invention est de permettre la sécurisation d'un poste tant du point de vue des données temporaires que des données persistantes.

Avantageusement, les données stockées dans le second volume chiffré comprennent, en outre, un second ensemble de données liées à l'activité de l'utilisateur connecté.

Le premier dispositif externe peut être dans un mode de réalisation un premier serveur distant.

Avantageusement, l'authentification est réalisée au moyen d'un système d'authentification d'un utilisateur par la définition d'un identifiant et d'un mot de passe au moyen d'une interface de l'équipement et que les accréditations dudit utilisateur sont déterminées par un mécanisme de requête à un serveur d'authentification connecté au réseau.

Un avantage est que l'invention s'applique à une communauté d'utilisateurs identifiés ou connus d'un réseau.

Avantageusement, la première fonction cryptographique permet la génération d'un premier code aléatoire. Le premier code correspond dans un mode de réalisation à une clefs de chiffrement.

Avantageusement, la création d'au moins un premier volume chiffré permet le chiffrement de toutes les données sauvegardées sur ledit premier volume à partir du premier code généré.

Un avantage du chiffrement des données sur le poste est que cette solution offre une alternative à l'effacement des données lorsque pour un usage donné, on souhaite conserver les données sur le poste. Il est également possible de supprimer le premier code aléatoire, c'est-à-dire la clef de chiffrement, ou le volume chiffré lui-même.

Avantageusement, chaque lien de redirection du premier ensemble de lien de redirection permet de déterminer un chemin d'accès au premier volume chiffré qui permet d'activer une commande de chiffrement des données sauvegardées sur le premier volume.

Un avantage dans un mode de réalisation est que c'est le chemin d'accès qui permet d'activer le chiffrement des données.

Avantageusement, les liens de redirections du premier ensemble de lien de redirection permettent la sauvegarde sur le premier volume chiffré de :
- fichiers temporaires d'au moins une application exécutée ;
- cookies générées par au moins une application exécutée ;
- d'états d'au moins une application exécutée.

Un avantage est que les données issues de la navigation et/ou de l'exploitation de la station de travail d'un utilisateur sont chiffrées et sauvegardés dans le premier volume chiffré et peuvent être supprimées après que sa session soit terminée.

Avantageusement, une fonction de gestion des règles d'écriture attribuées à un utilisateur permet de transposer les mêmes règles sur les chemins de redirection. En outre, la décomposition en deux espaces d'exécution ou encore appelés « espaces logiciels », permet la gestion des règles d'écriture et des chemins de redirection. Un premier espace correspond au noyau et un second espace correspond à un espace utilisateur. Selon différentes configurations l'espace utilisateur peut être défini dans le noyau.

Cette fonctionnalité permet de conserver les règles d'écriture imposées à un utilisateur selon la police de sécurité qui lui est appliquée. Les règles sont alors transposées aux chemins de redirection qui pointent le volume chiffré. La redirection est alors transparente pour l'utilisateur du point de vue de l'héritage de ses droits qui ont été acquis lors de son authentification.

Dans un premier mode de réalisation, le second code peut être généré en fonction de l'identifiant de session de l'utilisateur, son mot de passe et l'heure d'ouverture de la session utilisateur. Dans un second mode, le second code est généré en fonction d'un certificat stocké sur un support de stockage connecté à l'équipement.

Un avantage est que l'opération cryptographique qui consiste à générer un second volume chiffré et des liens de redirection est transparente pour l'utilisateur qui ne rentre qu'une seule fois son identifiant ou son mot de passe à partir d'une interface de connexion pour ouvrir sa session. Ainsi, la sécurisation de ses données temporaires liées à son activité est automatiquement entreprise dès lors que l'utilisateur se connecte à un poste relié au réseau.

Selon un mode de réalisation, la seconde fonction cryptographique est adaptée à générer un second code formant une première demi-clef compatible d'une seconde demi-clef stockée sur le premier dispositif externe.

L'enregistrement des données sur le second volume chiffré s'effectue après un contrôle positif de la compatibilité des deux demi-clefs.

Un avantage de cette caractéristique est que les données persistantes restent accessibles sur le serveur distant à un utilisateur déconnecté lors d'une connexion future. Un accès à ses données est envisageable selon si l'utilisateur qui tente d'y accéder possède la première demi-clef ou pas. En outre, cette solution permet de ne pas écraser les données chiffrées restées sur le poste local. Cette possibilité permet éventuellement l'économie d'une opération.

Un autre objet de l'invention concerne un procédé de sécurisation à l'accès de données liées à l'activité d'un utilisateur d'un équipement. L'équipement est connecté à un réseau, ledit équipement comporte une interface permettant d'ouvrir une session selon le procédé de traçage des données. La déconnection de l'utilisateur comprend une étape d'effacement du second code.

Avantageusement, l'effacement du second code est réalisé selon une procédure sécurisée comprenant une pluralité de phases d'écrasement des données.

Avantageusement, le procédé de sécurisation comprend :
▪ la sauvegarde des données persistantes sur le premier dispositif externe ;
▪ l'inaccessibilité du second volume chiffré ;
▪ l'effacement du premier code aléatoire et/ou du second code aléatoire ;
▪ l'inaccessibilité au premier volume chiffré et au premier ensemble de liens de redirection ;
▪ l'inaccessibilité au second ensemble de liens de redirection.

Un autre avantage du procédé de l'invention est de pouvoir effacer un grand volume de données simplement après la déconnexion d'un utilisateur.

### BREVES DESCRIPTION DES FIGURES

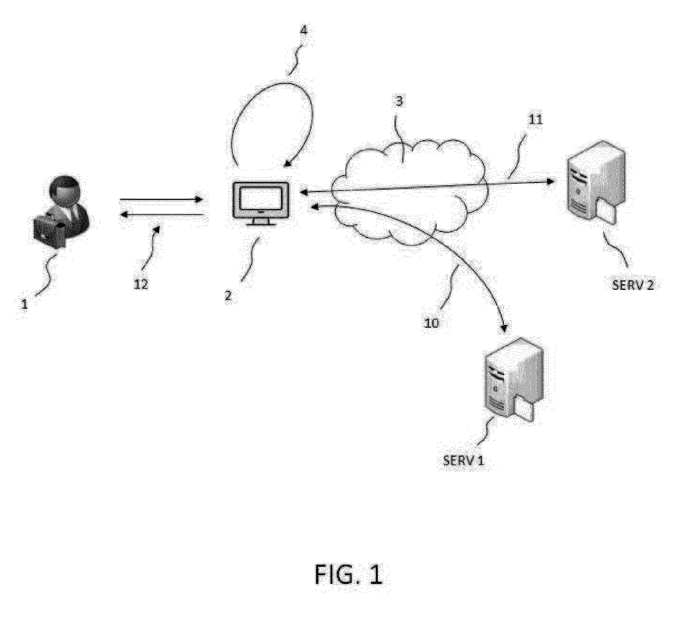

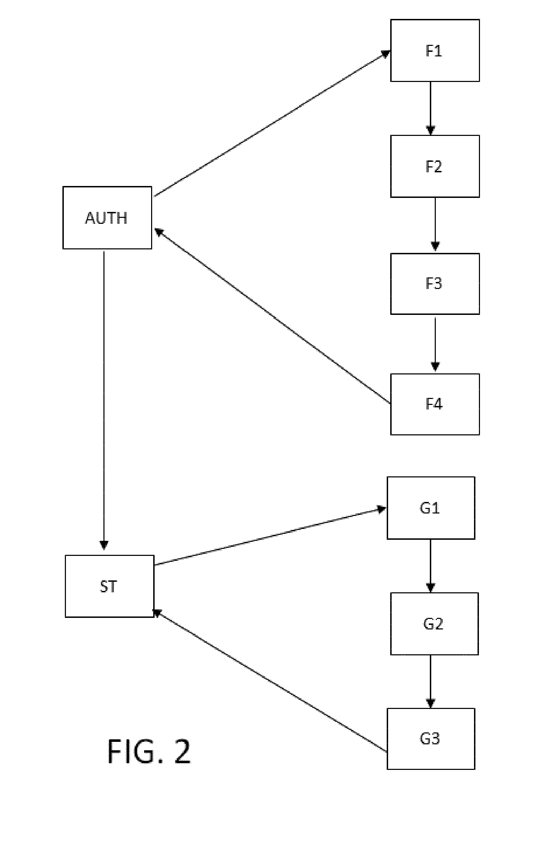

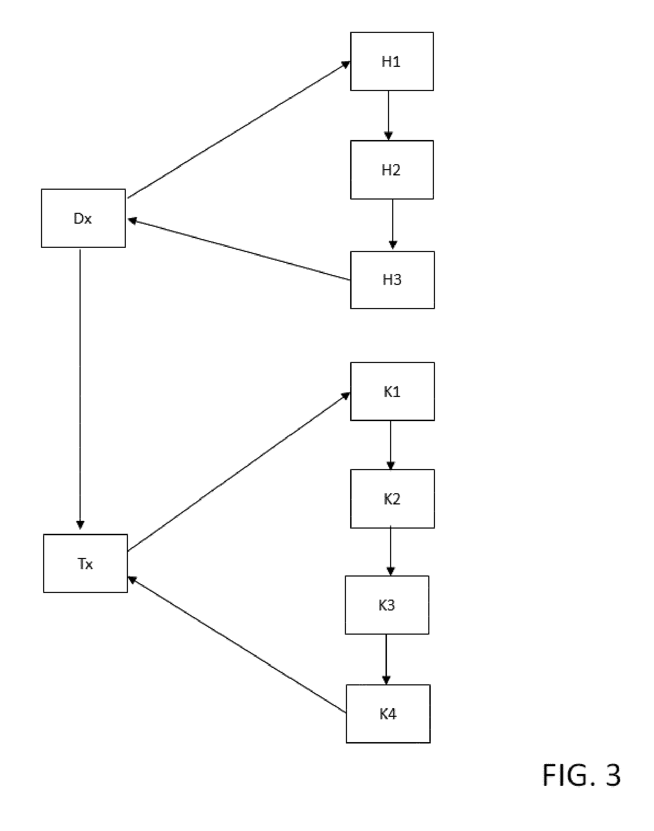

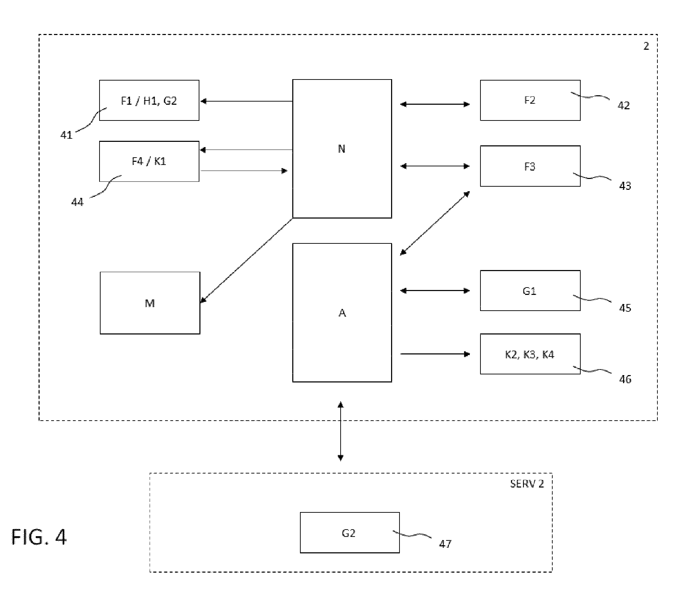

D'autres caractéristiques et avantages de l'invention ressortiront à la lecture de la description détaillée qui suit, en référence aux figures annexées, qui illustrent :
▪ figure 1 : une représentation d'un utilisateur interagissant avec une station de travail connectée à un réseau permettant de réaliser le procédé de l'invention;
▪ figure 2 : les principales étapes du procédé de traçage de données lors de l'authentification d'un utilisateur;
▪ figure 3 : les principales étapes du procédé de sécurisation de l'accès aux données liées à l'activité d'un utilisateur lors de sa déconnexion ;
▪ figure 4 : une représentation par bloc d'applications des fonctions nécessaires pour la mise en oeuvre des procédés de l'invention.

### DESCRIPTION

Dans la présente invention, on nomme les données temporaires : les données relatives aux activités de gestion de fichiers d'un utilisateur, telles que des enregistrements, modifications, téléchargements, ouverture et fermeture de fichier(s), etc. ainsi que toutes autres manipulations de données de gestion de fichiers. Parmi ces données, on trouve également les données temporaires générées lors de la navigation sur internet par exemple comme des cookies ou encore des données d'états de systèmes ou d'applications.

On nomme les données persistantes : les données utilisateurs qui correspondent aux données personnelles de l'utilisateur. Elles comprennent notamment des répertoires comprenant des fichiers et les fichiers eux-mêmes. Les données persistantes comprennent également les données de profil, les préférences utilisateurs et les données relatives à l'environnement de travail tel que des données de configurations d'applications ou de définition de profil pour une application donnée ou un système donné. Les données persistantes peuvent comprendre une configuration d'OS ou encore les polices de sécurité et les droits d'accès si ces derniers sont sauvegardés dans un espace personnel.

On distingue généralement les deux types de données puisque les données temporaires sont nécessaires au fonctionnement de l'environnement de l'utilisateur connecté lors de son activité sur la station de travail. Elles sont généralement créées indépendamment de la volonté de l'utilisateur, elles dépendent de l'environnement de travail tel que l'OS, le Framework et les applications du poste de travail et de la configuration réseau. Elles permettent d'optimiser les actions utilisateurs sans pour autant qu'il soit tenu informé de leur génération.

En revanche, les données persistantes correspondent généralement à des actions volontaires d'un utilisateur telles que la création d'un document, le téléchargement et la sauvegarde de données, la modification de données de profil ou de préférences, une nouvelle utilisation d'un programme générant un premier fichier, etc.

On nomme indifféremment dans la présente description un « poste local » ou une « station locale » pour désigner un mode de réalisation dans lequel l'équipement est une station de travail fixe ou un PC portable pouvant se connecté à un réseau.

La figure 1 représente un utilisateur 1 s'authentifiant selon un mécanisme 12 d'authentification à un équipement 2 qui peut être une station de travail connectée à un réseau 3 tel que par exemple un réseau d'entreprise. La station 2 peut être localisée dans un lieu de travail à proximité d'un accès local au réseau 3 ou peut être déportée à distance par exemple lorsque l'utilisateur est en déplacement et connecté via une connexion à distance.

Le procédé de traçage de données de l'invention comprend des étapes qui sont comprises entre une connexion d'un utilisateur par l'ouverture d'une session sur le réseau via le poste 2 et une déconnexion à cette même session. Le procédé de l'invention permet donc de tracer les données persistantes et temporaires générées lors de ces deux derniers évènements. Lors de la déconnexion de l'utilisateur, une possibilité est d'effacer ces données ou de les rendre inaccessibles localement sur le poste afin d'en interdire l'accès par un second utilisateur se connectant par la suite.

Entre les évènements d'une connexion et d'une déconnexion via le poste 2 d'un utilisateur 1, le procédé de traçage de données permet à l'utilisateur d'accéder à ses données personnelles, son profil utilisateur, ses données applicatives et ses préférences pendant le laps de temps de sa connexion, tout en garantissant une sécurisation post-connexion en protégeant l'accès à toutes les traces laissées à l'issue de sa session.

Un dispositif externe SERV 1 permet la gestion des données persistantes de l'utilisateurs, de leur profil, des données d'applications utilisateurs ainsi que des règles d'accès aux différentes applications et à la gestion des règles de partage. Le dispositif externe SERV 1 peut être un serveur de données distant accessible à la station de travail depuis le réseau. Selon d'autres modes de réalisation, l'équipement SERV 1 peut être une clef USB connectée à la station de travail ou encore un disque dur externe.

Dans la suite de la description, le dispositif externe SERV 1 est considéré comme un serveur distant pour illustrer un mode de réalisation de l'invention.

En outre, ce serveur SERV 1 permet de stocker les préférences utilisateurs et les données réseaux telles que les données internet et/ou de messagerie. Ce serveur peut, par exemple, comprendre une implémentation de l'architecture SAMBA et/ou CIFS. Il est physiquement relié au réseau au moyen d'une liaison 10.

Dans des alternatives de réalisation, ces données peuvent être réparties sur différents serveurs. Dans la présente description, un mode de réalisation envisage la gestion de ces données sur un serveur de données distant SERV 1.

Un second serveur SERV 2 permet la gestion des authentifications des utilisateurs. On le nomme également le serveur d'authentification AUTH. Ce serveur permet le contrôle des accès au réseau par un ensemble d'utilisateurs appartenant à une communauté, la gestion des identifiants et des mots de passe utilisateurs. En outre, ce serveur permet la gestion des droits d'accès, de la politique de sécurité attribuée à un utilisateur et des certificats. Il est physiquement relié au réseau au moyen d'une liaison 11.

Généralement, le mécanisme d'authentification d'un utilisateur comprend en premier lieu l'émission d'une requête 12, 11 par la station 2 au serveur d'authentification SERV 2 comprenant un échange d'informations. L'échange d'informations 12 comprend la saisie d'un identifiant et d'un mot de passe de l'utilisateur du poste de travail 2. En second lieu, la station 2 est capable de recevoir un message retour comprenant une autorisation ou non à l'accès au réseau. En outre, ce message retour permet l'instanciation de la session utilisateur par une réponse 11, 12 du serveur SERV 2 à la station locale 2. L'instanciation comprend l'initialisation d'une connexion au réseau et permet d'activer automatiquement les disques réseaux accessibles à l'utilisateur. Lorsque le disque de données du serveur de données SERV 1 est connecté et accessible depuis la station locale 2, on dit que le disque de données du serveur de données SERV 1 est monté.

La station locale 2 comprend une fonction 4 de chiffrement des données localement stockées sur un disque du poste 2. Cette fonction est par la suite détaillée à la lumière des figures 2 et 3 selon des modes de réalisation.

La figure 2 représente les principales étapes du procédé de traçage des données liées à l'activité d'un utilisateur sur le poste local 2 lors de son authentification.

Lorsqu'un utilisateur se connecte au poste local 2, deux principales étapes se succèdent : une première étape d'authentification AUTH et une seconde étape d'instanciation ST du contexte utilisateur.

Le procédé de l'invention permet au sein de ces deux étapes de lancer des sous-étapes permettant une traçabilité de toutes les données qui seront générées par l'activité de l'utilisateur sur le poste local 2 pendant toute la durée de sa session.

L'authentification de l'utilisateur est réalisée par une première fonction F1 qui permet de récupérer via une interface du poste local 2, l'identifiant et un mot de passe de l'utilisateur. Cette fonction F1, comme décrit précédemment, permet de générer une requête à un serveur distant SERV 2. Cette requête permet de contrôler l'identité de l'utilisateur et le cas échéant des accréditations et/ou des droits lui permettant d'accéder à un environnement dédié.

La fonction F1 permet en outre de contrôler l'identité de l'utilisateur et de lui attribuer une politique de sécurité prédéfinie.

Une seconde fonction F2 permet la génération d'un premier code aléatoire à l'issu de l'authentification réalisée par la fonction F1, notamment par les échanges entre le poste local 2 et le serveur SERV 2.

La fonction F2 peut être une fonction cryptographique permettant la génération d'un nombre aléatoire comprenant une taille prédéfinie relative à la fonction cryptographique. A titre d'exemple, le nombre aléatoire peut être généré à partir d'une heure de connexion ou d'un identifiant, ou par tout autre moyen dépendant ou non de l'utilisateur.

Le code généré par la fonction F2 permet de définir une clef pour le chiffrement d'un premier volume stockant les données temporaires qui seront générées par l'activité de l'utilisateur lors de sa session.

Ensuite, une troisième fonction F3 permet la création d'un premier volume de stockage et l'associe à au moins un des répertoires du disque de la station locale. Le premier volume chiffré est sauvegardé dans une mémoire M de l'équipement 2.

La fonction F3 permet de créer un premier volume chiffré, c'est-à-dire que dans un mode de réalisation, tous les fichiers qui seront sauvegardés sur le premier volume défini seront chiffrés. Le chiffrement peut être exécuté au moyen d'un algorithme de chiffrement. L'algorithme de chiffrement peut être par exemple exécuté par une application telle que Truecrypt qui est connue.

On nomme ce volume un « volume chiffré » dans la mesure où les fichiers/données enregistrés sur ce volume sont chiffrés.

Une quatrième fonction F4 permet la création d'un premier ensemble de liens de redirection. Ces liens de redirection permettent de désigner des chemins d'accès des enregistrements de données temporaires sur le premier volume chiffré précédemment créé.

La fonction F4 permet la récupération de l'ensemble des données de profils utilisateurs et les droits d'accès, lorsqu'ils existent, à un ensemble d'applications données et connues.

Tous les chemins définis pour la création de données temporaires sont redirigés vers le premier volume chiffré créé précédemment. Cette étape nécessite une configuration qui permet de tracer tous les chemins initialement créés pour stocker les données temporaires de manière à configurer leur redirection vers le premier volume chiffré.

Outre le bénéfice de centraliser et de chiffrer les données temporaires créées lors de la session de l'utilisateur connecté dans le volume chiffré, cette opération a l'avantage d'être transparente pour l'utilisateur qui n'a pas spécifiquement connaissance de l'enregistrement des données temporaires sur un volume spécialement créé pour stocker ces données. Par ailleurs, il n'y a pas d'étape supplémentaire à réaliser manuellement par l'utilisateur, la création du volume chiffré et la redirection des liens étant automatiquement réalisées lors de l'initialisation de la génération d'un code aléatoire qui ne résulte pas d'une action utilisateur.

Dans un mode particulier, la définition de la redirection des chemins d'accès des applications et programmes peut prendre en compte les droits de l'utilisateur et de son contexte utilisateur. Notamment, cette configuration peut avoir lieu si les données temporaires générées ne dépendent pas seulement des applications ou programmes accessibles depuis le poste local mais aussi du profil utilisateur ainsi que de ses droits.

Le contexte d'un utilisateur comprend notamment la liste des programmes qu'il utilise ou dont il a accès et les droits qui sont attribués à l'utilisateur. Dans ce dernier cas l'étape AUTH d'authentification et l'étape ST d'instanciation ci-après décrite peuvent se réaliser de manière combinée ou partiellement simultanément.

Dans le cas contraire, lorsque cette quatrième fonction F4 est réalisée, la première étape AUTH d'authentification peut se terminer. La seconde étape ST d'instanciation peut débuter.

Cette seconde étape d'instanciation ST du contexte utilisateur comporte un second aspect lié au traitement des données persistantes de l'utilisateur. Il s'agit des données notamment stockées sur un serveur de données, noté SERV 1 sur la figure 1.

Ce second aspect concerne les données dites persistantes correspondant à la gestion de données émanant d'actions à priori volontaires de l'utilisateur pour les créer. Les données peuvent comprendre de nouvelles données générées pendant la session utilisateur ou peuvent provenir d'un serveur distant SERV1 si elles sont appelées par l'utilisateur lors de son activité.

Une première fonction G1 de cette seconde phase concerne la génération d'un second code, ce dernier étant généré en fonction des données d'authentification de l'utilisateur.

Le second code permet de définir une première demi-clef de chiffrement qui est stockée sur la station de travail. Une seconde demi-clef est générée sur le dispositif externe SERV 1, c'est-à-dire le serveur de données distant.

Par exemple, il peut s'agir de son identifiant, de son mot de passe, de l'heure de connexion ou encore d'un certificat qui est stocké sur un support personnel qui peut être connecté au poste local ou encore d'une combinaison de ces derniers paramètres.

Dans cette seconde phase, une seconde fonction G2 concerne la création d'un second volume chiffré suite à la connexion d'au moins un disque réseau correspondant aux droits d'accès de l'utilisateur.

Cette fonction G2 permet de créer localement un second volume chiffré dans une mémoire de l'équipement 2. Dans une alternative de réalisation ce volume peut être créé sur un serveur distant.

Le gestionnaire de fichiers local peut être administré sous différentes formes, tels que par exemple les composantes NTFS, FAT32, EFS. Il permet notamment, comme décrit ci-après, la récupération des droits d'accès et la politique de sécurité associés à l'utilisateur s'étant authentifié préalablement de manière à les transposer et les appliquer aux premier et second volume chiffrés. Généralement, le gestionnaire de fichiers local est dans le poste utilisateur intégré à son système d'exploitation.

Dans un mode de réalisation, de manière analogue à la création du premier volume chiffré, tous les fichiers qui seront sauvegardés sur le second volume défini seront chiffrés. Le chiffrement peut être exécuté au moyen d'un algorithme de chiffrement. Par exemple, un algorithme de chiffrement possible peut être exécuté par une application Truecrypt qui est connue.

La fonction G1 permet de générer un second code comme une première demi-clef qui sera stockée sur le poste local 2. Une deuxième demi-clef est stockée sur le serveur de données SERV 1 et est compatible à la première demi-clef de telle sorte que les deux demi-clefs sont nécessaires pour déchiffrer les données chiffrées stockées dans le second volume.

Dans un premier mode de réalisation, la première demi-clef peut être récupérée à partir d'une application exécutée sur le serveur SERV1 pour vérifier sa compatibilité avec la seconde demi-clef stockée sur le serveur SERV1.

Dans un autre mode de réalisation, la compatibilité s'effectue sur le poste local au moyen d'une application exécutée sur le poste locale. Dans ce cas c'est la seconde demi-clef qui est sur le serveur SERV1 qui est envoyée sur le poste de travail. Dans les deux modes de réalisation, le contrôle de compatibilité peut s'effectuer de manière autonome sans qu'une opération de l'utilisateur ne soit nécessaire.

Lorsque le contrôle de la compatibilité des deux demi-clefs est positif, le contenu du second volume chiffré est accessible à l'utilisateur ainsi que le rapatriement des données persistantes du serveur SERV1 vers le poste local. En outre, les opérations d'édition, de suppression de création de données sont autorisées sur le second volume chiffré.

L'ouverture du second volume chiffré permet d'accéder aux données persistantes mémorisées dans l'équipement distant SERV 1.

Dans un tel mode de réalisation, un utilisateur tiers qui se connecterait après la déconnexion du premier utilisateur ne pourrait pas accéder aux données persistantes chiffrées dans le second volume chiffré et dans le premier serveur puisqu'il n'aurait pas la première demi-clef nécessaire aux déchiffrements des données.

Si les données sont accessibles via le second volume chiffré ouvert sur le poste local, la suppression de la première demi-clef locale permet de bloquer l'accès à ce volume.

Si les données sont sauvegardées en chiffré sur le serveur de données SERV1, seul le premier utilisateur ayant la première demi-clef pourra y accéder directement sur le serveur indépendamment de ce qui est resté stocké sur le poste local 2.

Si les données sont sauvegardées en claires sur le serveur de données SERV1, les données stockées sur le poste local restent stockées en chiffré et ne seront pas accessibles à un utilisateur tiers. Les données stockées en claires sur le serveur de données distant peuvent être rendues non accessibles à un utilisateur tiers par une configuration et une gestion des droits d'accès restreignant les droits d'accès d'un tiers à ces données.

Une troisième fonction G3 permet la création d'un second ensemble de liens de redirections permettant de désigner des chemins d'accès pour chaque application ou programme lancé par un utilisateur. Les enregistrements de données persistantes sont redirigés sur le second volume chiffré. Cette opération peut être masquée pour l'utilisateur de manière à émuler un fonctionnement normal pour ce dernier.

En outre le second volume chiffré peut comprendre un second ensemble de données liées à l'activité de l'utilisateur qui est connecté. Les enregistrements des données de ce second ensemble peuvent être effectuées de manière transparentes pour l'utilisateur.

Lors de la connexion au disque réseau comportant le second volume chiffré après l'authentification de l'utilisateur par le serveur SERV2 ainsi que la récupération de ses droits d'accès réseaux, la fonction G3 est capable de définir la redirection des liens des répertoires de données vers le second volume chiffré.

Lorsque l'utilisateur se connecte à un poste local permettant le procédé de l'invention, les fonctions F1, F2 ; F3, F4, G1, G2 et G3 permettent d'établir deux volumes chiffrés dans lesquels les données générées par un utilisateur seront stockées.

De ce fait, le procédé de l'invention permet de tracer les données temporaires et persistantes. Lors de la déconnexion de l'utilisateur à la fin de sa session, différentes opérations peuvent être envisagées par le procédé de sécurisation de l'invention.

Tout d'abord, les données persistantes mémorisées dans le second volume chiffré peuvent être sauvegardées sur un serveur distant SERV1. En second lieu, les clefs de chiffrement peuvent être supprimées du poste local de manière à sécuriser les données chiffrées stockées localement. La suppression peut être réalisée selon un procédé sécurisé. Enfin, les volumes chiffrés stockés localement peuvent être supprimés.

La figure 3 représente deux phases se déroulant lors de la fin de session engagée par un utilisateur souhaitant se déconnecter du poste local.

Une première phase est notée Dx et correspond à la déconnexion de l'utilisateur du poste local. Une première fonction H1 correspond à l'émission d'une requête de déconnexion depuis le poste local vers le serveur SERV 2 via la liaison 11. L'envoi de la requête engage le mécanisme de déconnexion du serveur d'authentification SERV 2.

Une seconde fonction H2 est lancée automatiquement ou peut être engagée manuellement par l'utilisateur permettant de déconnecter au moins un disque réseau comprenant le second volume chiffré comportant lui-même les données persistantes de l'utilisateur. Lors de cette étape les données persistantes de l'utilisateur peuvent être sauvegardées sur un serveur distant de données tel que le serveur SERV 1. La sauvegarde du second volume chiffré peut être réalisée de manière synchronisée avec la déconnexion de l'utilisateur. La sauvegarde peut être réalisée de sorte à enregistrer les données en chiffré ou en clair sur un disque réseau.

Dans le cas où ces données sont sauvegardées en chiffrées sur le serveur distant, la première demi-clef générée localement doit pouvoir être régénérée pour une connexion ultérieure de ce même utilisateur pour accéder à ses données.

La seconde fonction H2 permet, en outre, au besoin, d'effacer ou d'écraser de manière sécurisée le second ensemble de liens de redirection des données. Cette étape est optionnelle dans la mesure où les seuls liens de redirections après une déconnexion accomplie ne permettent pas de récupérer des données sur les volumes chiffrés. Cependant, l'effacement du second ensemble de liens de redirection permet d'accomplir une procédure complète d'effacement permettant de maintenir dans son usage un poste local vierge de données parasites générées par l'activité d'un utilisateur.

Une troisième fonction H3 est lancée pour l'effacement de la première demi-clef permettant de chiffré le second volume.

La fonction H3 peut engager un effacement de clef sécurisé, c'est à dire que plusieurs phases d'écrasements sont successivement réalisées de manière à garantir l'effacement de la première demi-clef. L'effacement de la première demi-clef est effectif de la RAM ou de la ROM ou de tout élément de stockage du poste local.

Lorsque les fonctions H1, H2 et H3 sont exécutées, la première phase Dx de déconnexion est réussie.

Une seconde phase, notée Tx sur la figure 3, est alors engagée permettant de sécuriser les accès au premier volume de données chiffrées correspondantes aux données temporaires. Une première fonction K1 permet de déconnecter le premier volume chiffré et éventuellement de le supprimer.

Une seconde fonction K2 permet d'effacer le premier code, c'est-à-dire le nombre généré aléatoirement lors de l'authentification. La suppression du premier code peut être également effectuée selon une procédure sécurisée comprenant une pluralité de phases d'écrasement de données, par exemple 7 phases.

De manière optionnelle, une fonction K3 permet d'effacer le premier ensemble des liens de redirections vers le premier volume qui ont été créés lors de l'authentification. Cette action permet d'aboutir à un nettoyage complet des données liées à l'activité de l'utilisateur lors de sa session.

Enfin, une quatrième fonction K4 permet d'effacer les données temporaires enregistrées lors des activités de l'utilisateur pendant la durée de la session et qui n'ont pu être redirigées vers le premier volume. Cette fonction doit être configurée pour que ces données soient automatiquement effacées lorsque le premier volume de données est déconnecté. Il peut s'agir par exemple de données stockées dans une base de registre dont les liens de redirections ne permettent pas l'effacement de ces données de manière sûre et sécurisée. Pour réaliser cette dernière fonction, différentes sous fonctions sont définies dans les logiciels ou les applications que l'on souhaite administrer de cette sorte.

La figure 4 représente, à l'aide de blocs d'applications, les fonctions nécessaires pour la mise en oeuvre des procédés de l'invention. Le poste 2 comprend un noyau N de type Kernel permettant de réaliser les fonctions communes entre la gestion des ressources de calcul d'un poste et la couche applicative comprenant l'ensemble des applications et les Frameworks éventuellement utilisés. Le poste 2 comprend un système d'applications A permettant d'assurer la mise en oeuvre notamment des applications cryptographiques, de création de liens de redirection et d'effacement. Le système d'application permet également l'accès au serveur de données utilisateurs, dites données de persistances et leur exploitation au niveau du poste local.

La figure 4 représente un premier bloc 41 permettant la réalisation des fonctions F1 et H1 qui permettent l'authentification d'un utilisateur sur le réseau, l'ouverture d'une session sur le poste local 2, la déconnexion de l'utilisateur ainsi que la fermeture de sa session.

Un second bloc 42 permet l'exécution d'une fonction cryptographique qui permet de générer un premier code aléatoire, tel qu'un nombre. La fonction cryptographique F2 comprend une librairie cryptographique permettant d'assurer une certaine sécurité à partir d'un niveau défini de sécurité souhaité. La complexité du code peut être paramétrée selon un mode de réalisation.

Un troisième bloc 43 permet l'exécution d'une fonction F3 permettant la création d'un premier volume chiffré. Le premier volume chiffré peut être stocké sur une mémoire M de l'équipement. Ce dernier peut comprendre la création d'un répertoire dans lequel les données sauvegardées sont chiffrées. La fonction F3 permet donc le chiffrement des données sauvegardées sur le volume créé à l'aide du premier code précédemment généré.

Un bloc 44 permet la réalisation d'une fonction F4 générant des liens de redirection vers les volumes chiffrés qui sont créés lors de l'exécution du procédé de l'invention.

Le bloc 44 correspond au gestionnaire de fichier local. Il comprend la gestion des fichiers du poste local, le montage des disques réseaux et leur démontage (K1).

Le gestionnaire de fichier local permet également la récupération des droits d'accès et la politique de sécurité associés à l'utilisateur s'étant authentifié préalablement de manière à les transposer aux premier et second volume chiffrés.

Dans ce cadre, la transposition des droits d'accès et de la politique de sécurité d'un utilisateur aux volumes chiffrés peut être assurée par une fonction de gestion des règles d'écriture attribuées à un utilisateur. En outre, cette fonction peut prendre en compte le re-calcul automatique des chemins d'accès de redirection lors des opérations effectuées sur les données manipulées par un utilisateur, telles que : l'édition, la création, la suppression de fichiers.

Dans un mode de réalisation, le procédé de traçage de données comprend les opérations effectuées par une telle fonction de gestion des règles d'écriture.

Une mémoire M permet le stockage de la première clef de chiffrement correspondant au premier code aléatoire généré et de la première demi-clef de chiffrement correspondant au deuxième code généré.

Un bloc 45 permet l'exécution d'une seconde fonction cryptographique G1. Cette fonction permet l'opération de création d'un second code correspondant à une première demi-clef locale à partir des données d'authentification d'un utilisateur ouvrant une session sur le poste local 2. Dans un autre mode de réalisation, la demi-clef peut être générée à partir d'un certificat stockée dans un support amovible comme décrit précédemment. En outre, la fonction G1 permet la compatibilité de la première demi-clef générée et stockée dans la mémoire M du poste local et d'une demi-clef stockée sur un serveur de données SERV 1.

Le bloc 46 défini les fonctions K2, K3 et K4 d'effacement de clefs, de volume de données, de liens de redirections et des données stockées temporaires ou persistantes. Selon un mode sécurisé de l'invention, les effacements peuvent être rendus sécurisés.

Le bloc 47 permet, côté serveur, de rendre compatible les foncions de connexion/déconnexion de disque G2 des données stockées sur un serveur SERV 1. Elle permet en outre le contrôle des droits d'accès d'un utilisateur à des données stockées sur le serveur SERV 1. En outre, la fonction permet également la gestion et le stockage d'une deuxième demi-clef de chiffrement.

## Revendications

1. Procédé de traçage de données liées à l'activité d'un utilisateur d'un équipement (2), ledit équipement étant connecté à un réseau (3), ledit équipement comportant une interface permettant d'ouvrir une session à au moins un utilisateur et permettant l'exécution d'un ensemble d'applications utilisateur, le procédé comprenant :
• une première étape d'authentification (AUTH) d'un utilisateur se connectant à l'équipement, cette étape comprenant :
∘ l'authentification (F1) d'un utilisateur (1) à l'équipement (2) ;
∘ la génération d'un premier code aléatoire par une première fonction cryptographique (F2) ;
∘ la création (F3) d'au moins un premier volume chiffré sauvegardé dans une mémoire (M) de l'équipement (2), le chiffrement des données sur le premier volume chiffré s'effectuant à partir du premier code aléatoire ;
∘ la création (F4) d'un premier ensemble de liens de redirection permettant de désigner des chemins d'accès pour chaque application des enregistrements de données temporaires sur le premier volume chiffré ;
• une seconde étape de lancement (ST) d'au moins une application de l'équipement (2) comprenant :
∘ la génération d'un second code à partir d'une seconde fonction cryptographique (G1), le second code étant fonction d'une donnée d'authentification de l'utilisateur (1) ;
∘ la création (G2) d'un second volume chiffré dans une mémoire de l'équipement, les données stockées dans ledit second volume étant des données persistantes comprenant un premier ensemble de données provenant d'un dispositif externe (SERV 1), le chiffrement des données stockées sur le second volume s'effectuant au moins à partir du second code ;
∘ la création (G3) d'un second ensemble de liens de redirection permettant de désigner des chemins d'accès pour chaque application des enregistrements de données persistantes sur le second volume chiffré.

2. Procédé de traçage de données selon la revendication 1, **caractérisé en ce que** les données stockées dans le second volume chiffré comprennent, en outre, un second ensemble de données liées à l'activité de l'utilisateur connecté.

3. Procédé de traçage de données selon l'une quelconque des revendications 1 à 2, **caractérisé en ce que** l'authentification (F1) est réalisée au moyen d'un système d'authentification d'un utilisateur par la définition d'un identifiant et d'un mot de passe au moyen d'une interface de l'équipement et que les accréditations dudit utilisateur sont déterminées par un mécanisme de requête à un serveur d'authentification (SERV 2) connecté au réseau (3).

4. Procédé de traçage de données selon l'une quelconque des revendications 1 à 3, **caractérisé en ce que** la création (F3) d'au moins un premier volume chiffré permet le chiffrement de toutes les données sauvegardées sur ledit premier volume à partir du premier code aléatoire.

5. Procédé de traçage de données selon l'une quelconque des revendications 1 à 4, **caractérisé en ce que** chaque lien de redirection permet de déterminer (F4) un chemin d'accès au premier volume chiffré qui permet d'activer une commande de chiffrement des données sauvegardées sur le premier volume.

6. Procédé de traçage de données selon l'une quelconque des revendications 1 à 5, **caractérisé en ce que** les liens de redirections permettent la sauvegarde sur le premier volume chiffré de :
• fichiers temporaires d'au moins une application exécutée ;
• cookies générées par au moins une application exécutée ;
• d'états d'au moins une application exécutée.

7. Procédé de traçage de données selon l'une quelconque des revendications 1 à 6, **caractérisé en ce qu'**une fonction de gestion des règles d'écriture attribuées à un utilisateur permet de transposer les mêmes règles sur les chemins de redirection.

8. Procédé de traçage de données selon l'une quelconque des revendications 1 à 7, **caractérisé en ce que** le second code est généré (G1) en fonction de l'identifiant de session de l'utilisateur, son mot de passe et l'heure d'ouverture de la session utilisateur.

9. Procédé de traçage de données selon l'une quelconque des revendications 1 à 7, **caractérisé en ce que** le second code est généré en fonction d'un certificat stocké sur un support de stockage connecté à l'équipement.

10. Procédé de traçage de données selon l'une quelconque des revendications 1 à 9, **caractérisé en ce que** la seconde fonction cryptographique (G1) est adaptée à générer un second code formant une première demi-clef compatible d'une seconde demi-clef stockée sur le premier dispositif externe (SERV 1), l'enregistrement des données sur le second volume chiffré s'effectuant après un contrôle positif de la compatibilité des deux demi-clefs.

11. Procédé de sécurisation à l'accès de données liées à l'activité d'un utilisateur d'un équipement (2), ledit équipement étant connecté à un réseau (3), ledit équipement comportant une interface permettant d'ouvrir une session selon le procédé de traçage des données selon l'une quelconque des revendications 1 à 10, **caractérisé en ce que** la déconnection (H1) de l'utilisateur comprend une étape d'effacement (H3) du second code.

12. Procédé de sécurisation selon la revendication 11, **caractérisé en ce que** l'effacement (H3) du second code est réalisé selon une procédure sécurisée comprenant une pluralité de phases d'écrasement des données.

13. Procédé de sécurisation selon l'une quelconque des revendications 11 à 12, **caractérisé en ce que** le procédé comprend la sauvegarde (H2) des données persistantes sur le premier dispositif externe (SERV 1).

14. Procédé de sécurisation selon l'une quelconque des revendications 11 à 13, **caractérisé en ce que** le procédé comprend la suppression (H2) du second volume chiffré.

15. Procédé de sécurisation selon l'une quelconque des revendications 11 à 14, **caractérisé en ce que** le procédé comprend l'effacement (K2) du premier code.

16. Procédé de sécurisation selon l'une quelconque des revendications 11 à 15, **caractérisé en ce que** le procédé comprend la suppression du premier volume chiffré (K1) et de l'ensemble des liens de redirection.

## Patentansprüche

1. Verfahren zur Verfolgung von mit der Aktivität eines Nutzers einer Ausrüstung (2) verbundener Daten, wobei die genannte Ausrüstung an ein Netz (3) angeschlossen ist, wobei die genannte Ausrüstung eine Schnittstelle umfasst, die das Öffnen einer Sitzung für wenigstens einen Nutzer erlaubt und die Ausführung einer Gruppe von Nutzeranwendungen erlaubt, wobei das Verfahren umfasst:
• Eine erste Authentifizierungsstufe (AUTH) eines Nutzers, die an die Ausrüstung angeschlossen wird, wobei diese Stufe umfasst:
∘ Die Authentifizierung (F1) eines Nutzers (1) mit der Ausrüstung (2);
∘ Die Generierung eines ersten zufälligen Codes durch eine erste kryptographische Funktion (F2);
∘ Die Erzeugung (F3) wenigstens eines ersten chiffrierten, in einem Speicher (M) der Ausrüstung (2) abgespeicherten Volumens, wobei die Chiffrierung der Daten auf dem ersten chiffrierten Volumen ab dem ersten zufälligen Code erfolgt;
o Die Erzeugung (F4) einer ersten Gruppe von Weiterleitungs-Links, die die Bezeichnung der Zugangspfade für jede Anwendung der Abspeicherungen von temporären Daten auf dem ersten chiffrierten Volumen erlaubt;
• Eine zweite Initiierungsstufe (ST) von wenigstens einer Anwendung der Ausrüstung (2), umfassend:
∘ Die Generierung eines zweiten Codes ab einer zweiten kryptographischen Funktion (G1), wobei der zweite Code von einer Authentifizierungsangabe des Nutzers (1) abhängt;
∘ Die Erzeugung (G2) eines zweiten chiffrierten Volumens in einem Speicher der Ausrüstung, wobei die in dem genannten zweiten Volumen gespeicherten Daten permanente Daten sind, die einen aus einer externen Vorrichtung (SERV 1) stammenden ersten Datensatz umfassen, wobei die Chiffrierung der auf dem zweiten Volumen gespeicherten Daten wenigstens ab dem zweiten Code erfolgt;
∘ Die Erzeugung (G3) einer zweiten Gruppe von Weiterleitungs-Links, die die Bezeichnung der Zugangspfade für jede Anwendung der Abspeicherungen von permanenten Daten auf dem zweiten chiffrierten Volumen erlaubt.

2. Verfahren zur Verfolgung von Daten gemäß Anspruch 1, dadurch gekenntzeichnet, dass die in dem zweiten chiffrierten Volumen abgespeicherte Daten darüber hinaus einen zweiten Datensatz umfassen, der mit der Aktivität des angeschlossenen Nutzers verbunden ist.

3. Verfahren zur Verfolgung von Daten gemäß Anspruch 1 bis 2, **dadurch gekennzeichnet, dass** die Authentifizierung (F1) anhand eines Authentifizierungssystems eines Nutzers durch die Definition einer Kennung und eines Passwortes anhand einer Schnittstelle der Ausrüstung realisiert ist und dass die Akkreditierungen des genannten Nutzers durch einen Anfragemechanismus an einen Authentifizierungsserver (SERV 2) bestimmt sind, der an das Netz (3) angeschlossen ist.

4. Verfahren zur Verfolgung von Daten gemäß Anspruch 1 bis 3, **dadurch gekennzeichnet, dass** die Erzeugung (F3) von wenigstens einem chiffrierte Volumen die Chiffrierung von allen auf dem genannten ersten Volumen abgespeicherten Daten ab dem ersten zufälligen Code erlaubt.

5. Verfahren zur Verfolgung von Daten gemäß Anspruch 1 bis 4, dadurch gekenntzeichnet, dass jeder Weiterleitungs-Link die Bestimmung (F4) eines Zugangspfades zum ersten chiffrierten Volumen erlaubt, der die Aktivierung eines Chiffrierungsbefehls der auf dem ersten Volumen abgespeicherten Daten erlaubt.

6. Verfahren zur Verfolgung von Daten gemäß Anspruch 1 bis 5, **dadurch gekennzeichnet, dass** die Weiterleitungs-Links die Abspeicherung auf dem ersten chiffrierten Volumen erlauben von:
• Temporären Dateien wenigstens einer ausgeführten Anwendung,
• Cookies, die durch wenigstens eine ausgeführte Anwendung generiert werden;
• Zuständen wenigstens einer ausgeführten Anwendung.

7. Verfahren zur Verfolgung von Daten gemäß Anspruch 1 bis 6, **dadurch gekennzeichnet, dass** eine Verwaltungsfunktion der einem Nutzer zugeordneten Schreibregeln die Übertragung derselben Regeln auf die Weiterleitungspfade erlaubt.

8. Verfahren zur Verfolgung von Daten gemäß Anspruch 1 bis 7, **dadurch gekennzeichnet, dass** der zweite Code in Abhängigkeit von der Sitzungskennung des Nutzers, seinem Passwort und der Eröffnungsuhrzeit der Nutzersitzung generiert (G1) wird.

9. Verfahren zur Verfolgung von Daten gemäß Anspruch 1 bis 7, **dadurch gekennzeichnet, dass** der zweite Code in Abhängigkeit von einem, auf einem an die Ausrüstung angeschlossenen Speicherträger gespeicherten Zertifikat generiert ist.

10. Verfahren zur Verfolgung von Daten gemäß Anspruch 1 bis 9, **dadurch gekennzeichnet, dass** die zweite kryptographische Funktion (G1) geeignet ist, um einen zweiten Code zu generierten, der einen ersten Halbschlüssel bildet, welcher mit einem zweiten Halbschlüssel kompatibel ist, der auf der ersten externen Vorrichtung (SERV 1) gespeichert ist, wobei das Abspeichern der Daten auf dem zweiten chiffrierten Volumen nach einer positiven Kontrolle der Kompatibilität der zwei Halbschlüssel erfolgt.

11. Sicherungsverfahren des Zugangs zu mit der Aktivität eines Nutzers einer Ausrüstung (2) verbundenen Daten, wobei die genannte Ausrüstung an ein Netz (3) angeschlossen ist, wobei die genannte Ausrüstung eine permanente Schnittstelle zum Öffnen einer Sitzung gemäß dem Verfahren zum Verfolgen von Daten gemäß Anspruch 1 bis 10 umfasst, dadurch gekennzeichet, dass das Abhängen (H1) des Nutzers eine Löschstufe (H3) des zweiten Codes umfasst.

12. Sicherungsverfahren gemäß Anspruch 11, **dadurch gekennzeichnet, dass** das Löschen (H3) des zweiten Codes gemäß einem gesicherten Verfahren realisiert wind, das eine Vielzahl von Löschphasen der Daten umfasst.

13. Sicherungsverfahren gemäß Anspruch 11 bis 12, dadurch gekennzeichet, dass das Verfahren die Abspeicherung (H2) der permanenten Daten auf der ersten externen Vorrichtung (SERV 1) umfasst.

14. Sicherungsverfahren gemäß Anspruch 11 bis 13, **dadurch gekennzeichnet, dass** das Verfahren die Unterdrückung (H2) des zweiten chiffrierten Volumens umfasst.

15. Sicherungsverfahren gemäß Anspruch 11 bis 14, **dadurch gekennzeichnet, dass** das Verfahren das Löschen (K2) des ersten Codes umfasst.

16. Sicherungsverfahren gemäß Anspruch 11 bis 15, **dadurch gekennzeichnet, dass** das Verfahren die Unterdrückung des ersten chiffrierten Volumens (Kl) und aller Weiterleitungs-Links umfasst.

## Claims

1. A method for tracing data related to an equipment (2) user's activity, said equipment being connected to a network (3), said equipment comprising an interface enabling at least one user to log in and enabling to execute a set of user applications, the method comprising:
• a first step of authenticating (AUTH) a user connecting to the equipment, this step comprising:
∘ authenticating (F1) a user (1) to the equipment (2);
∘ generating a first random code by a first cryptographic function (F2);
∘ creating (F3) at least one first encrypted volume backed up in a memory (M) of the equipment (2), the encryption of the data on the first encrypted volume being made from the first random code;
∘ creating (F4) a first set of redirection links for designating access parts for each application of records of soft data on the first encrypted volume;
• second step of starting (ST) at least one application of the equipment (2) comprising:
∘ generating a second code from a second cryptographic function (G1), the second code being a function of a user authentication datum (1) ;
∘ creating (G2) a second encrypted volume in a memory of the equipment, the data stored in said second volume being persistent data comprising a first set of data coming from an external devise (SERV 1), the encryption of the data stored on the second volume being made at least from the second code;
∘ creating (G3) a second set of redirection link for designating access paths for each application of records of persistent data on the second encrypted volume.

2. The method for tracing data according to claim 1, **characterized in that** the data stored in the second encrypted volume further comprises a second set of data related to the connected user's activity.

3. The method for tracing data according to any of claims 1 to 2, **characterized in that** the authentication (Fl) is made by means of a user authentication system by defining an identifier and a password by means of an equipment interface and **in that** the credentials of said user are determined by a mechanism of querying an authentication server (SERV 2) connected to the network (3).

4. The method for tracing data according to any of claims 1 to 3, **characterized in that** creating (F3) at least one first encrypted volume enables the encryption of all the data stored on said first volume from the first random code.

5. The method for tracing data according to any of claims 1 to 4, **characterized in that** each redirection link enables to determine (F4) an access path to the first encrypted volume which enables an encryption order of the data backed up on the first volume to be activated.

6. The method for tracing data according to any of claims 1 to 5, **characterized in that** the redirection links enable the back up on the first encrypted volume of:
• temporary files of at least one executed application;
• cookies generated by at least one executed application;
• states of at least one executed application.

7. The method for tracing data according to any of claims 1 to 6, **characterized in that** a function of managing writing rules assigned to a user enables the same rules to be transposed on the redirection paths.

8. The method for tracing data according to any of claims 1 to 7, **characterized in that** the second code is generated (G1) as a function of the user's session identifier, his password, and the logging time of the user's session.

9. The method for tracing data according to any of claims 1 to 7, **characterized in that** the second code is generated as a function of a certificate stored on a storing medium connected to the equipment.

10. The method for tracing data according to any of claims 1 to 9, **characterized in that** the second cryptographic function (G1) is adapted to generate a second code forming a first half-key compatible with a second half-key stored on the first external device (SERV 1), the recording of the data on the second encrypted volume being made after a positive control of the compatibility of broth half-keys.

11. A method for securing access to data related to an equipment (2) user's activity, said equipment being connected to a network (3), said equipment comprising an interface for logging in according to the method for tracing data according to any of claims 1 to 10, **characterized in that** deconnecting (H1) the user comprises a step of erasing (H3) the second code.

12. The securing method according to claim 11, **characterized in that** erasing (H3) the second code is made according to a secured procedure comprising a plurality of data overwriting phases.

13. The securing method according to any of claims 11 to 12, **characterized in that** the method comprises backing up (H2) persisting data on the first external device (SERV 1).

14. The securing method according to any of claims 11 to 13, **characterized in that** the method comprises deleting (H2) the second encrypted volume.

15. The securing method according to any of claims 11 to 14, **characterized in that** the method comprises erasing (K2) the first code.

16. The securing method according to any of claims 11 to 15, **characterized in that** the method comprises deleting the first encrypted volume (K1) and the set of redirection links.
